# EUROPÄISCHE PATENTANMELDUNG

(11) **EP 1 604 773 A1**
(43) Veröffentlichungstag der Anmeldung: **14.12.2005**
(21) Anmeldenummer: 05012187.0
(22) Anmeldetag: 07.06.2005
(51) Int. Cl.: B23K 26/42, B23K 9/235

(54) **Verfahren zur Vorbehandlung verzinkter Stahlbleche oder Aluminiumbleche zum Schweissen**

(30) Priorität: 09.06.2004 DE 102004028197
(71) Anmelder: JENOPTIK Automatisierungstechnik GmbH, 07745 Jena (DE)
(72) Erfinder: Weinzierl, Uwe, Dr., 07743 Jena (DE); Preuss, Norbert, 07743 Jena (DE); Löffler, Klaus, 38547 Calberlah (DE); Hanschmann, Florian, 38102 Braunschweig (DE)
(74) Vertreter: Schaller, Renate

(57) **Zusammenfassung**

Die Erfindung betrifft ein Verfahren zur Verbesserung der Schweißbarkeit von verzinkten Stahlblechen durch Vorbehandlung der Oberfläche im für die Schweißverbindung vorgesehenen Fügebereich, bei dem ein Strahl eines atmosphärischen Niedertemperaturplasmas auf die Oberfläche gerichtet wird.

## Beschreibung

Die Erfindung betrifft ein Verfahren zur Vorbehandlung verzinkter Stahlbleche oder Aluminiumbleche zum Schweißen, insbesondere zum Laserschweißen. Unter einem verzinkten Stahlblech sollen auch solche Stahlbleche verstanden werden, bei dem die aufgetragene Schutzschicht lediglich Zinkanteile aufweist. Hier kommen insbesondere Zink-Aluminium, Zink-Nickellegierungen oder auch organische Materialien, wie z. B. ein Zinkstaublack oder ein mit Zink versetzter Kunststoff in Betracht.

Es ist bekannt, dass beim Verschweißen von verzinkten Stahlblechen, ohne dass zusätzliche Maßnahmen getroffen werden, qualitative Probleme im Schweißnahtbereich auftreten. Da das Zink bereits bei wesentlich tieferen Temperaturen als Stahlblech zu schmelzen beginnt und verdampft, entstehen Lunker und Fehlstellen um die Schweißnaht. Diese haben eine mangelnde Festigkeit und Dichtheit der Schweißnaht, deren Korrosionsanfälligkeit und eine verschlechterte Schweißnahtgeometrie zur Folge.

Aus dem Stand der Technik sind eine Vielzahl verschiedener Maßnahmen bekannt, mit denen man versucht, die Qualität der entstehenden Schweißnaht zu verbessern.

So ist in der EP 0 527 229 B1 ein Verfahren zum Laserschweißen, insbesondere von verzinkten Stahlblechen beschrieben, bei dem ein vor dem Schweißprozess gemischtes Hilfsgas aus Sauerstoff und ein weiteres Gas während des Schweißprozesses eingesetzt werden.
Das Sauerstoffgas verbindet sich mit dem Zink und bildet Zinkoxid und Zinkperoxid, also Feststoffe bei Unterdrückung der Verdampfung von Zink, wodurch ersichtlich weniger Lunker entstehen sollen.

In der EP 0 446 677 B1 wird ein Verfahren zur Herstellung eines verzinkten Stahlbleches verbesserter Schweißbarkeit offenbart, bei dem vor Abscheiden der Zinkschicht auf der Oberfläche des Stahlbleches eine Eisen/Kohlenstoff-Schicht eines bestimmten Kohlenstoffgehaltes auf die Oberfläche des Stahlbleches aufgetragen wird.
Der in dieser Schrift beschriebene Stand der Technik wird durch zwei japanische Patentanmeldungen bestimmt, bei denen jeweils die Schweißbarkeit eines verzinkten Stahlbleches durch das Ausbilden eines Oxidfilmes auf der verzinkten Oberfläche verbessert werden soll.
Dieser Oxidfilm wird für ein in der JP 60-063394 oder JP 02-004983 beschriebenes verzinktes Stahlblech durch Heißtauchen aufgetragen.
Der Verfasser der EP 0 446 677 B1 erklärt, dass Versuche, bei denen auf dem mit Zink plattiertem Stahlblech ein Oxidfilm ausgebildet wird, bisher insofern fehlgeschlagen sind, als dass in großtechnischem Maßstab keine zufriedenstellenden Ergebnisse erreicht wurden.

Verzinkte Stahlbleche werden insbesondere für Fahrzeugkarossen, Industriebehälter und Gehäuse für Haushaltsgeräte verwendet.
Insbesondere wegen der guten Haftung darauf aufgebrachter Überzüge und ihrer Korrosionsbeständigkeit ist der Einsatz verzinkter Stahlbleche vor allem in der Automobilindustrie stetig steigend. In dieser Branche, in der sich die Wettbewerber in der Qualität der Produkte und deren technischem Stand kaum noch unterscheiden, wird der Konkurrenzkampf hauptsächlich über die Herstellungskosten entschieden. Aufgrund der immensen herzustellenden Stückzahlen fallen bereits geringfügige Einsparungen an Zeit- und Materialeinsatz ins Gewicht. Es ist daher eine permanente Zielstellung, den Produktionszyklus zur Herstellung eines Fahrzeuges zu verkürzen, was z. B. durch Substitution zeitlich schneller ablaufender Verfahren und Vermeidung technologisch notwendiger Stillstandszeiten möglich ist. Außerdem ist man bestrebt, dass die für den Herstellungsprozess notwendige Anlagentechnik möglichst wartungsarm und robust ist. Letztendlich lassen sich die Herstellungskosten auch durch einen sparsamen Einsatz von Hilfsstoffen senken.

Betrachtet man sich unter diesen Gesichtspunkten die in der Beschreibung des Standes der Technik aufgezeigten Lösungen, so erkennt man, dass diese jeweils einen erheblichen Aufwand erfordern, um ein verzinktes Stahlblech den Qualitätsansprüchen genügend, nämlich ohne Lunkerbildung und bei Verbleib der Zinkschicht um die Schweißnaht, schweißen zu können.
Der Einsatz eines Hilfsgases während des Laserschweißens (EP 0 446 677 B1) erfordert speziell ausgeführte Schweißdüsen, mit denen in der Regel der Gasstrom koaxial zum Laserstrahl auf das Werkstück gerichtet wird. Im Unterschied zu Laserschweißanlagen, die ohne Hilfsgas arbeiten, müssen hier zusätzliche technische Maßnahmen zur Gasversorgung und Gasabsaugung getroffen werden.
Die anderen genannten Lösungen bedeuten das zusätzliche Aufbringen einer Schicht. Diese wird verfahrensbedingt jeweils auf die gesamte Oberfläche aufgetragen, das heißt auch in den Oberflächenbereichen, die gar nicht als Fügefläche für eine spätere Schweißverbindung vorgesehen sind. Der Materialeinsatz für die Beschichtung ist daher um ein Vielfaches größer, als funktionell tatsächlich notwendig. Darüber hinaus erfordert z. B. das Heißtauchen notwendige Abkühl- und Trockenzeiten.

Laut der Beschreibung des Standes der Technik in der DE 101 35 611 A1 werden zur Reduzierung der Verdampfung des Beschichtungsmaterials häufig teuere Spezialelektroden eingesetzt, die in der Regel mit reduziertem Schweißstrom arbeiten. Dadurch wird jedoch unter Umständen die mechanische Belastbarkeit der Schweißverbindung beeinträchtigt und die Durchsatzleistung der entsprechenden Produktionsanlage gemindert.

Bei anderen Verfahren würden spezielle konstruktive Maßnahmen getroffen, um ein ungehindertes Entweichen der entstehenden Prozessdämpfe zu ermöglichen.

Gegenüber diesem Stand der Technik wird in der DE 101 35 611 A1 beanspruchten Lösung vorgeschlagen, die Korrosionsschutzschicht (Zinkschicht) abrasiv partiell zu entfernen bzw. erheblich zu reduzieren. Zur Entfernung der Zinkschicht im Schweißnahtbereich (Fügezone) eigne sich ein miniaturisiertes Sandstrahlgebläse, wie es beispielsweise in der Zahnmedizin zum Entfernen von Zahnbelegen verwendet werde. Um Verunreinigungen der umgebenden Oberfläche zu vermeiden und das Strahlgut der Wiederverwendung zuzuführen, sind Maßnahmen zu Absaugung zu treffen, z. B. durch Verwendung eines Unterdruckstrahlgerätes.
Es wird ausdrücklich darauf hingewiesen, dass sich dieses Verfahren insbesondere auch für Verschweißungen mittels Laser eigne und dass speziell im Karosseriebau im Stoß aufeinanderliegende Oberflächen der Karosseriebleche nach vorheriger Bearbeitung mit einem Unterdruckstrahlgerät prozesssicher verschweißen lassen.
Als geeignete Strahlmittel werden mineralische Korunde genannt. Auch Glas, Salze, Natron, gemahlene Nussschalen, Eis oder Trockeneis seien denkbar, wobei letztere Mittel den Vorteil hätten, dass keine Rückstände von Strahlmitteln entfernt werden müssten. Eine nachteilige Wirkung auf die Korrosionseigenschaften hätte das mit der DE 101 35 611 A1 beanspruchte Verfahren gegenüber dem Stand der Technik nicht, da die Zinkschicht ohnehin im Bereich der Schweißnaht verdampft.

Zur Verbesserung der Schweißbarkeit von elektrisch leitfähigen Werkstücken aus leicht oxidierbaren Metallen, die zur Bildung von den Schweißprozess behindernden Oberflächenschichten neigen, wird in der DE 199 27 557 A1 vorgeschlagen, eine hochfrequente Bogenentladung zu erzeugen, die auf die Oberfläche überspringt und die störende Oberflächenschicht an zufällig verteilten Punkten perforiert und teilweise verdampft.

Der Erfindung liegt die Aufgabe zugrunde, geeignete Maßnahmen zur Verbesserung der Schweißbarkeit von verzinkten Stahlblechen zu finden, die einen möglichst geringen technischen -, Zeit- und Material-Aufwand erfordern.

Diese Aufgabe wird für ein Verfahren gemäß dem Oberbegriff des Anspruches 1 dadurch gelöst, dass ein Strahl eines atmosphärischen Niedertemperaturplasmas auf die Oberfläche gerichtet wird.

Vorteilhafte Ausführungen sind in den Unteransprüchen angegeben.

Die Verwendung eines atmosphärischen Niedertemperaturplasmas zur Oberflächenbehandlung ist als solches nicht neu.

In der EP 0 761 415 B1 wird ein Verfahren zur Erhöhung der Benetzbarkeit der Oberfläche von Werkzeugen mit Flüssigkeiten vorgeschlagen, bei dem durch Plasmaentladung unter Zufuhr eines Arbeitsgases ein Strahl eines reaktiven Mediums erzeugt wird und über die zu behandelnde Oberfläche geführt wird. Im Unterschied zu aus dem Stand der Technik bekannten Verfahren zur Plasmaerzeugung hat das Plasma zur Oberflächenbehandlung eine verhältnismäßig geringe Temperatur, so dass es auch empfindliche Oberflächen nicht verletzen kann. Das Verfahren eigne sich zur Behandlung von leitenden als auch nicht leitenden Werkstücken, insbesondere von Werkstücken aus Kunststoff.
Ein Strahlgenerator, mit dem ein zur Verfahrensdurchführung geeignetes atmosphärisches Niedertemperaturplasma erzeugt werden kann, ist in der EP 0 761 415 B1 beschrieben, der für die Vorbehandlung von Kunststoffen mit einem nichtübertragbaren Bogen dient. Ebenso wie bei einem Strahlgenerator, wie er in der EP 1 292 176 A2 beschrieben ist, wird der zur Generierung des Plasmas erzeugte elektrische Bogen nicht auf das Werkstück übertragen. Um die physikalischen und chemischen Eigenschaften des den Strahlgenerator verlassenden Plasmastrahls zu erfahren, wurden Versuche durchgeführt, über deren Ergebnisse in der EP 0 761 415 B1 berichtet ist.
Es scheint danach nicht klar zu sein, ob es sich bei dem Plasma tatsächlich um ein Plasma im eigentlichen Sinne, als um ein zumindest teilweise ionisiertes Medium handelt, oder ob es lediglich freie radikale oder angeregte Atome oder Moleküle enthält.
Jedenfalls konnte nachgewiesen werden, dass der Plasmastrahl die gewünschte vorbehandelnde Wirkung auf der Werkstückoberfläche gebracht hat. Es wurden verschiedene Kunststoffoberflächen, die normalerweise nicht mit Wasser benetzbar sind, in den Plasmastrahl gebracht. Anschließend konnten sie mit Wasser benetzt werden. Es wurde berichtet, dass auch Metalloberflächen mit Hilfe des Plasmastrahls beispielsweise von Siliconrückständen und dergleichen befreit werden konnten. Bei Versuchen mit unedlen Metallen, z. B. Aluminium, hätte sich gezeigt, dass der Plasmastrahl praktisch keine oxidierende Wirkung hat, sich also keine, dickere als die natürliche, Oxidschicht bildet.

In der EP 1 292 176 A2 wird einleitend angegeben, wofür der mit dem dort beanspruchten Strahlgenerator erzeugte elektrisch neutrale Plasmastrahl geeignet sein soll. Danach ist der Plasmastrahl geeignet zur Behandlung von Oberflächen, z.B. zur Vorbehandlung und Reinigung von Oberflächen vor dem Verkleben, Beschichten oder Lackieren, zum Beschichten, Hydrophilisieren, Entfernen von elektrischen Ladungen oder Sterilisieren sowie zur Beschleunigung von chemischen Reaktionen. Obwohl nicht explizit so in der EP 1 292 176 A2 erwähnt, kann der Fachmann aus der Aufzählung der Verwendungsmöglichkeiten schließen, dass mittels des Plasmastrahls alle adhäsiv auf der Oberfläche haftenden Stoffe entfernt werden.

Die EP 0 761 415 B1 und die EP 1 292 176 A2 bieten keinen Ansatz, nach dem es dem Fachmann nahegelegt wäre, mit einem atmosphärischen Niedertemperaturplasma ein verzinktes Stahlblech zum Verschweißen vorzubehandeln.

Eine solche Anwendbarkeit ist auch für die Anmelderin völlig überraschend, obwohl sie seit Jahren gemäß dem EP 1 292 176 A2 hergestellte Strahlgeneratoren als Zuliefereinheit bezieht, um sie in maschinelle Anlagen zu integrieren. Gemäß den im Stand der Technik genannten Anwendungsmöglichkeiten werden die Strahlgeneratoren für Reinigungsanlagen von elektrischen Bauteilen und Schaltungen sowie für Anlagen zur Aktivierung von Kunststoffen zur Verbesserung der Verklebbarkeit eingesetzt.

In einem Versuch wurde die Oberfläche zweier mit einer Kehlnaht zu verschweißenden verzinkten Stahlblechen mit einem Plasmastrahl behandelt, wie er mit einem Strahlgenerator gemäß dem EP 1 292 176 A2 erzeugt wurde. Konkret wurden Stahlbleche verwendet mit einer ca. 5 µm starken galvanisch abgeschiedenen Zinkschicht. Als Prozessgas wurde in einem Versuch Luft und in einem anderen Versuch ein Stickstoff-Sauerstoffgemisch verwendet. Die Strahlaustrittsöffnung des Strahlgenerators wurde dabei mit einer Entfernung von 12 mm +/- 2 mm zur Oberfläche der Stahlbleche und mit einer Geschwindigkeit von 80 mm/s +/- 10 mm/s geführt.

Anschließend wurden die beiden Bleche mittels Laser in für den Fachmann bekannter Weise verschweißt. Sehr gute Ergebnisse wurden beispielsweise mit einem Nd-YAG-Laser bei einer applizierten Leistung von maximal 2,5 kW erzeugt.
Die beim Schweißen auftretenden Effekte und das Schweißergebnis sind bei gleichen Verfahrensparametern für nicht vorbehandeltes und erfindungsgemäß vorbehandeltes Stahlblech unterschiedlich.
So entwickeln sich beim Verschweißen der vorbehandelten Stahlbleche weitaus geringere Mengen an Prozessdämpfen.

Die entstehende Schweißnaht hat eine deutlich bessere Schweißnahtoberfläche und weist deutlich weniger Lunker und Fehlstellen auf. Außerdem ist die Schweißnaht weniger verzundert.

Wie sich herausgestellt hat, entstehen Schweißnähte vergleichbar guter Qualität auch wenn nur eines der beiden zu verschweißenden Stahlbleche im zum Verschweißen vorgesehen Oberflächenbereich (Fügebereich) mit dem Plasmastrahl vorbehandelt wird.

Es wird vermutet, dass die Einwirkung des Plasmastrahls die Zinkschicht dahingehend verändert, dass sie erst bei höheren Temperaturen zu schmelzen beginnt.

Gegenüber dem bekannten Stand der Technik zur Verbesserung der Schweißqualität beim Verschweißen von verzinkten Stahlblechen hat die erfindungsgemäße Vorbehandlung den Vorteil, dass es weniger technisch, zeit- und materialaufwendig ist und damit eine kostengünstige Alternative insbesondere bei einer hochautomatisierten Großserienproduktion ist.

Überraschenderweise wurde festgestellt dass auch bei Aluminiumblechen die Oberflächenbehandlung im für die Schweißverbindung vorgesehenen Fügebereich mit einem atmosphärischen Niedertemperaturplasma zur Verbesserung der Verschweißbarkeit führt.

## Patentansprüche

1. Verfahren zur Verbesserung der Schweißbarkeit von verzinkten Stahlblechen oder Aluminiumblechen durch Vorbehandlung der Oberfläche im für die Schweißverbindung vorgesehenen Fügebereich, **dadurch gekennzeichnet, dass** ein Strahl eines atmosphärischen, elektrisch neutralen Niedertemperaturplasmas auf die Oberfläche gerichtet wird.

2. Verfahren nach Anspruch 1, **dadurch gekennzeichnet, dass** das Plasma elektrisch gezündet wird.

3. Verfahren nach Anspruch 1, **dadurch gekennzeichnet, dass** als Prozessgas für die Erzeugung des Plasmas Luft verwendet wird.

4. Verfahren nach Anspruch 1, **dadurch gekennzeichnet, dass** nur die Oberfläche eines der miteinander zu verschweißenden verzinkten Bleche vorbehandelt wird.
